# EUROPÄISCHE PATENTSCHRIFT

(11) **EP 2 819 841 B1**
(45) Veröffentlichungstag und Bekanntmachung des Hinweises auf die Patenterteilung: **16.11.2016**
(21) Anmeldenummer: 12815641.1
(22) Anmeldetag: 21.12.2012
(51) Int. Cl.: B32B 5/26, B32B 5/28, B32B 17/04, B32B 5/12, B32B 5/02, B32B 27/12

(54) **MEHRLAGIGES FASERVERSTÄRKTES KUNSTSTOFF-BAUTEIL UND VERFAHREN ZU DESSEN HERSTELLUNG**
MULTI-LAYER FIBRE-REINFORCED PLASTIC COMPONENT AND METHOD FOR THE PRODUCTION THEREOF
COMPOSANT MULTICOUCHE EN MATIÈRE PLASTIQUE RENFORCÉ PAR DES FIBRES ET PROCÉDÉ DE FABRICATION DE CELUI-CI

(30) Priorität: 01.03.2012 DE 102012004109
(43) Veröffentlichungstag der Anmeldung: 07.01.2015
(73) Patentinhaber: Daimler AG, 70327 Stuttgart (DE)
(72) Erfinder: HUMPENÖDER, Jens, 89077 Ulm (DE); ROTHENBURGER, Holger, 89073 Ulm (DE); STEIN, Philipp, 89073 Ulm (DE)
(74) Vertreter: JENSEN & SON
(86) Internationale Anmeldenummer: PCT/EP2012/005343
(87) Internationale Veröffentlichungsnummer: WO 2013/127419

(56) Entgegenhaltungen:
- EP-A2- 0 323 571
- EP-A2- 0 790 342
- WO-A1-03/057453

## Beschreibung

Die Erfindung betrifft ein faserverstärktes Kunststoff-Bauteil aus einer mehrlagigen Faserstruktur und einer Deckschicht, die eine lackierfähige Class-A-Oberfläche bildet.

Bei der Darstellung einer Class-A-tauglichen Oberfläche für Kraftfahrzeuge, insbesondere Personenkraftwagen, aus faserverstärkten Kunststoffen ist zurzeit erheblicher Nacharbeitungsaufwand erforderlich. Die Faserabzeichnungen werden durch das Auftragen von mehreren Schichten Primer und Filler und anschließendem Schleifen vor der Bauteillackierung minimiert. Komplett kann die entstehende Oberflächenwelligkeit aktuell jedoch nicht verhindert werden.

Das oberflächliche Erscheinungsbild sowie die Wahrnehmbarkeit von Strukturen an der Oberfläche hängen von verschiedenen Faktoren ab. Zum einen spielen die Größe der Oberflächenstrukturen eine Rolle, zum anderen der Betrachtungsabstand und die Abbildungsqualität der Oberfläche.

So liegt die Welligkeit bei Automobillacken im Bereich von ca. 0,1 bis 30 mm Wellenlänge. Ein mit einer solchen Struktur hervorgerufener Effekt wird beispielsweise mit "Orange Peel" bezeichnet, der auf hochglänzenden Oberflächen als ein welliges Muster heller und dunkler Felder wahrgenommen wird. Bei hellen Feldern wird das Licht in Richtung des Betrachters reflektiert, während die dunklen Felder aus den Neigungswinkeln der Strukturen resultieren, die das Licht in andere Richtungen reflektieren.

Die Erkennbarkeit der Strukturen hängt von dem Abstand des Betrachters zur Oberfläche ab. Da mit zunehmender Distanz die Strukturen umso kleiner erscheinen, werden Wellen von 10 bis 30 mm Wellenlänge am besten bei einem Abstand von etwa 3 m wahrgenommen, während Welligkeiten im Bereich von 0,1 bis 1 mm erst bei naher Betrachtung sichtbar werden. Strukturen mit Wellenlängen unter 0,1 mm, was in etwa dem Auflösungsvermögen des menschlichen Auges entspricht, werden dann auch bei naher Betrachtung nicht mehr wahrgenommen. Solche Strukturen führen zu einer Verminderung der Abbildungsqualität, d. h. dem Kontrast und der Schärfe, mit dem etwa Kanten wahrgenommen werden.

Das zu Grunde liegende physikalische Phänomen für das Entstehen der Welligkeit an den Oberflächen von faserverstärkten Kunststoffbauteilen ist das unterschiedliche Schwindungsverhalten von Faser und Matrix, was bei lackierten faserverstärkten Bauteilen nach Klimaeinwirkung zur Bildung von Oberflächenwelligkeiten führt, die als Faserabzeichnung bzw. Welligkeit an der Bauteiloberfläche wahrgenommen werden.

Bei den üblichen 2D-Matten überkreuzen sich die Faserstränge innerhalb der Matte/Faserlage, so dass sich an den Überkreuzungspunkten der Faserstränge der höhere Faseranteil an der Oberfläche abzeichnet.

Insbesondere während der Bewitterung des Außenhaut-Bauteils von Kraftfahrzeugen mit Aufwärm-/Abwärm-Zyklen bildet sich auf der Bauteiloberfläche eine Welligkeit aus, weil die Fasern und das Matrixpolymer unterschiedliche Ausdehnungskoeffizienten haben.

Dies ist besonders dann der Fall, wenn das Matrixpolymer ein Thermoplast und kein Duroplast ist.

Dennoch bietet der Einsatz thermoplastischer Matrixwerkstoffe gegenüber duroplastischen Matrixsystemen Vorteile, wie etwa kürzere Zykluszeiten, eine nahezu unbegrenzte Lagerfähigkeit des Halbzeugs und einfaches Recycling. Bauteile aus thermoplastischen Faserverbundwerkstoffen haben zudem eine höhere Bruchdehnung und bei schlagartigen Beanspruchungen eine größere Energieaufnahme, was besonders im Kraftfahrzeugbau im Hinblick auf Kollisionen von Interesse ist.

Dabei stellen die Faserabzeichnungen, auch Fibre-Read-Outs genannt, neben anderen Einflussfaktoren wie Faltenbildungen, Faserauskämmung, Sink-Marks oder Pinholes ein materialbedingtes Defektpotenzial dar, das schon während des Verarbeitungsprozesses zum Tragen kommt, da bei der thermoplastischen Matrix eine deutliche Änderung des spezifischen Volumens stattfindet, während die Fasern nur eine geringe Wärmedehnung erfahren. So hat beispielsweise PP eine fünffach höhere Wärmedehnung als Glasfasern.

Aufgrund dieses Schwindungsunterschieds innerhalb eines FVK-Schichtaufbaus entstehen die lokalen Einfallstellen an der Bauteiloberfläche zwischen den Kreuzungspunkten der Faserverstärkung, die einen höheren Faservolumen-Anteil aufweisen. Hierbei ist zwischen einer kurzwelligen Störung, entstanden durch sich durchzeichnende Einzelfasern, und einer langwelligen Störung der Oberfläche durch die Webstruktur des Halbzeuges zu unterscheiden.

Um solche Oberflächenstörungen zu beseitigen, wird beispielsweise Matrixpolymer in der Oberflächenschicht angereichert, es zeichnen sich jedoch hier dennoch nach gewisser Zeit die Einfallstellen wieder ab. Eine Möglichkeit, durch die die langwelligen Störungen gut ausgeglichen werden können, liegt in dem Einsatz verschiedener Kombinationen von Folien und Vliesen. Gerade an der Oberfläche angeordnete Faservliese dämpfen durch ihre unregelmäßigen Faserkreuzungspunkte das Durchzeichnen der Gewebestruktur.

So beschreibt etwa die DE 199 58 805 B4 ein Faserverbundbauteil, bei dem es sich insbesondere um ein lackierbares Kraftfahrzeug-Karosserieteil handelt, das zumindest eine Deckschicht aus einem in einem Matrixsystem eingebetteten Wirrfaservlies aufweist, um ohne aufwändige Vorbehandlung der Faserverbundoberfläche eine gut haftende Direktlackierung mit einer optisch hochwertigen Lackoberfläche zu ermöglichen. Das Wirrfaservlies wird vor dem Einbringen und Konsolidieren des Matrixsystems im Wege einer statistisch regellosen Materialverteilung derart strukturiert, dass die Bauteiloberfläche nach dem Einbringen und Konsolidieren des Matrixsystems eine unregelmäßige Welligkeitsverteilung von mehr als 100 µm und Welligkeitstiefe im µm-Bereich aufweist. Im kürzeren Welligkeitsbereich soll die Bauteiloberfläche eine unregelmäßige Welligkeitsverteilung von 10 bis 100 µm und Welligkeitstiefe von ±1 µm aufweisen.

Faserverbundbauteile werden außerdem beschrieben in der EP 0323571 A2 und in der EP 0790352 A2.

Ferner beschreibt die EP 0933195 A1 zur Verbesserung der Oberflächengüte die Anordnung zumindest einer Kompensationsschicht zwischen der Deck- und der Tragschicht eines faserverstärkten Kunststoffbauteils zur Kompensation von an der Oberfläche der Deckschicht auftretenden sichtbaren regelmäßigen Oberflächenstrukturen. Hierbei wird mit Deckschicht eine faserfreie Kunstharzschicht bezeichnet. Diese Oberfläche ist unabhängig von den Umgebungsbedingungen und weist "Class-A" Güte auf. Die Kompensationsschicht kann aus dem Kunstharz der Tragschicht mit regellos darin aufgenommenen Fasern gebildet werden. Weitere Kompensationsschichten zwischen der Deck- und Tragschicht führen zu weiterer Verbesserung der Oberflachenqualität des Kunststoffbauteils.

Ausgehend von diesem Stand der Technik ist es Aufgabe der vorliegenden Erfindung, ein verbessertes Faserkunststoffverbundbauteil mit einer Class-A-Oberflächengüte, insbesondere für ein Außenhautbauteil eines Kraftfahrzeugs bereitzustellen, das auch unter wechselnden Klimaeinwirkungen keine lokalen Einfallstellen zeigt.

Diese Aufgabe wird durch ein faserverstärktes Kunststoffbauteil mit den Merkmalen des Anspruchs 1 gelöst. Weiterbildungen sind in den Unteransprüchen ausgeführt.

Ein faserverstärktes Kunststoffbauteil (FVK-Bauteil) gemäß einer erfindungsgemäßen Ausführungsform besteht aus einer mehrlagigen Verstärkungsfaserstruktur und zumindest einer Deckschicht aus einem in einem Matrixsystem eingebetteten Faservlies, die eine lackierfähige Class-A-Oberfläche bildet. Das Kunststoffbauteil umfasst dabei zumindest eine Dämpfungsschicht, die zwischen zwei jweils benachbarten Faserlagen der mehrlagigen Verstärkungsfaserstruktur angeordnet ist und die aus einem Faservlies besteht, das in ein Matrixsystem eingebettet ist. Durch die Faservliese als Dämpfungsschichten zwischen den Verstärkungs-Faserlagen können die Faserabzeichnungen, die bislang aufgrund des unterschiedlichen Schwindungsverhaltens von Fasern und Matrixkunststoff bzw. aufgrund von Klimaeinwirkungen auftreten, deutlich reduziert, gegebenenfalls sogar verhindert werden. Das erfindungsgemäße faserverstärkte Kunststoffbauteil weist nach Lackieren der Deckschicht keine sichtbaren Welligkeiten auf und ist so besonders zur Darstellung einer Fahrzeugaußenhaut geeignet.

Bevorzugt kann das Kunststoffbauteil mehrere Dämpfungsschichten umfassen, wobei erfindungsgemäß jeweils eine Dämpfungsschicht zwischen zwei benachbarten Faserlagen der mehrlagigen Verstärkungsfaserstruktur angeordnet ist.

Dabei weisen die Faservliese, die die Dämpfungsschichten bilden, eine gröbere Struktur auf als die Faservliese, die die Deckschicht(en) bilden. Dies liegt daran, dass die Deckschichten die lackierfähige Class-A-Oberfläche bereitstellen, während die Vliese der Dämpfungsschicht lediglich das Abzeichnen der Verstärkungs-Faserlagen abschirmen. Unter einer gröberen Struktur ist hier eine geringere Faserdichte oder geringeres Flächengewicht, bzw. ein höherer Porenanteil des Faservlieses zu verstehen. Hierfür kann als Messgröße das Flächengewicht der Faservliese dienen

Die Faservliese der Deckschichten stellen eine Oberfläche für das Kunststoffbauteil bereit, deren Strukturen eine Varianz von Lichtintensitäten in einem langwelligen Wellenlängenbereich von 1,2 bis 12 mm (auch mit "long wave" bezeichnet) kleiner 12 und eine Varianz von Lichtintensitäten in einem Wellenlängenbereich von 0,3 bis 1,2 mm (auch mit "short wave" bezeichnet) kleiner 20 aufweisen, wobei die Lichtintensitäten entlang einer Strecke auf der Oberfläche unter einem vorbestimmten Winkel, der von einem Einstrahlungswinkel einer Beleuchtungsquelle abhängt, reflektierte Lichtintensitäten sind, so dass an der Oberfläche des Kunststoffbauteils keine Welligkeit aus dem Faservlies detektierbar ist.

Diese Varianzen der Lichtintensitäten in den beiden Wellenlängenbereichen gibt ein Maß für die Strukturen der Oberfläche an und kann beispielsweise mit einem "wave-scan"-Gerät der Firma Byk-Gardner gemessen werden. Näheres dazu wird in der folgenden Beschreibung dargelegt.

Während die Dicke der einzelnen Verstärkungsfaserschichten im FVK-Bauteil bei ca. 100 bis 400 µm liegt, beträgt die Dicke der einzelnen Faservliese für die Dämpfungsschichten oder die Deckschicht nur 10 bis 50 µm. Bevorzugt ist die Dicke der Faservliese der Dämpfungsschichten und Deckschichten im Bereich von 5 bis 40 %, besonders bevorzugt 5 bis 20% der Dicke mindestens einer der benachbarten Verstärkungsfaserlagen. Überraschenderweise reichen bereits diese vergleichsweise dünnen Dämpfungsschichten aus, um an der Oberfläche des FVK-Bauteils nahezu glatte Class-A Oberflächen in einer für Kraftfahrzeuge, insbesondere für Personenkraftwagen geeigneten Qualität auszubilden.

Die Fasern in den Faserlagen können als Gewebe, unidirektionale oder multidirektionale Gelege, Gestricke, Geflechte aus Einzelfasern, Faserbündeln (Rovings) oder Faserbändern (Tapes) vorliegen, wobei die Fasern Glasfasern, Kohlefasern, bzw. Kohlenstoff- oder Carbonfasern, Polymerfasern, bevorzugt Aramidfasern, Metallfasern, Keramikfasern und/oder Naturfasern sind. Bevorzugte Faserlagen werden aus UD-Tapes oder Spread-Tows gebildet. Bevorzugt sind die Verstärkungsfasern Glasfasern.

Wird als Polymermatrix des FVK-Bauteils ein Thermoplast verwendet, so werden als Verstärkungs-Faserlagen mit Thermoplast infiltrierte oder imprägnierte Fasern eingesetzt. Als Thermoplastmatrix sind beispielsweise Polypropylen, Polyamid, Polyethylenterephthalat, Polycarbonat, Polybutylenterephthalat und deren Mischungen geeignet.

Wird als Polymermatrix ein Harz (Duroplast) verwendet, so können als Verstärkungsfaser-Lagen mit Harz imprägnierte oder auch nicht imprägnierte Fasern eingesetzt werden. Dies richtet sich nach den späteren Verarbeitungsverfahren, wie beispielsweise RTM oder Harzinfusion.

Werden die Faserlagen durch unidirektionale Gelege, insbesondere UD-Tapes gebildet, *sind* die Faserausrichtungen der unidirektionalen Gelege in benachbarten Faserlagen zueinander um einen Winkel zwischen 0° bis 90° versetzt.

Ein FVK-Bauteil mit Faserlagen aus unidirektionalen Gelegen, die jeweils durch Dämpfungsschichten, die die Faserkonturen ausgleichen, voneinander getrennt sind, weist keine Faserkreuzungspunkte auf. So werden lokale Stellen mit erhöhtem Faseranteil vermieden, die sich bislang besonders stark an der Oberfläche abzeichnen.

Ferner kann auf der Deckschicht aus Faservlies eine Kunststofffolie oder eine Coextrusionsfolie angeordnet sein. Diese verbessert die Oberflächenqualität weiter und trägt zu einer sehr guten Überlackierbarkeit bei.

Für die Dämpfungsschicht kann ein Faservlies mit Flächengewicht von 10 bis 150 g/m², bevorzugt von 20 bis 100 g/m², besonders bevorzugt von ca. 50 g/m² eingesetzt werden, während als Faservlies der Deckschicht ein Flächengewicht von 10 bis 150 g/m², bevorzugt von 20 bis 100 g/m², besonders bevorzugt von ca. 50 g/m² verwendet wird. Je nach Verarbeitungsprozess, wie beispielsweise Heißpressen oder RTM-Verfahren, wird das Faservlies unterschiedlich verdichtet und mit Matrix gefüllt.

Diese und weitere Vorteile werden durch die nachfolgende Beschreibung unter Bezug auf die begleitenden Figuren dargelegt.

Der Bezug auf die Figuren in der Beschreibung dient der Unterstützung der Beschreibung und dem erleichterten Verständnis des Gegenstands. Die Figuren sind lediglich eine schematische Darstellung einer Ausführungsform der Erfindung.

Dabei zeigen:
- Fig. 1: eine perspektivische Ansicht des mehrschichtigen Aufbaus eines erfindungsgemäßen FVK-Bauteils,
- Fig. 2: eine Schnittansicht durch den Schichtaufbau eines weiteren FVK-Bauteils mit zwei Deckschichtvarianten.

Das erfindungsgemäße FVK-Bauteil, bei dem es sich insbesondere um ein Organoblech oder Kraftfahrzeugbauteil handeln kann, weist zumindest eine Class-A-taugliche Oberfläche auf, um etwa als Außenbeplankung direkt lackiert werden zu können. Die Verstärkungsfasern des Faserverbundbauteils, die aus Glas, Carbonfaser oder Kohlefaser, Aramid etc. bestehen können, können u. a. als Gewebe, Gelege, Gestricke oder UD-Tapes in einer Kunststoffmatrix eingesetzt werden, die aus Thermoplasten oder Duroplasten bestehen kann.

Mit dem erfindungsgemäßen Bauteil wird der Aufwand zur Nachbearbeitung der Oberfläche durch Primern, Fillern und anschließendes Schleifen bis zur lackierfähigen Class-A-Güte reduziert, bzw. kann völlig entfallen, da nun das Entstehen von Oberflächenwelligkeiten an der Oberfläche bei lackierten faserverstärkten Bauteilen nach Klimaeinwirkung, die als Faserabzeichnung an der Bauteiloberfläche wahrgenommen wird, unterbunden wird.

Oberflächenwelligkeiten können in den zur Beurteilung von Oberflächen relevanten Wellenlängenbereichen von 0,3 bis 1,2 mm ("short wave") und von 1,2 bis 12 mm ("long wave") gemessen werden.

Dazu kann beispielsweise das Gerät "wave-scan" der Firma Byk-Gardner verwendet werden, das die visuelle Betrachtung einer Oberfläche nachbildet. Das wave-scan-Gerät tastet das infolge der Welligkeit entstehende Helligkeitsmuster auf der Oberfläche optisch ab, wobei eine Laser-Punktlichtquelle die Probe unter einem Winkel von 60° beleuchtet und ein Detektor auf der Gegenseite des Geräts das reflektierte Licht misst. Das Gerät wird über eine definierte Strecke entlang der Oberfläche bewegt und nimmt von Punkt zu Punkt die reflektierten Intensitäten auf. Je nach Neigungswinkel der beleuchteten Struktur an jedem Punkt wird eine hohe oder niedrige Lichtmenge in den Detektor reflektiert. So entsteht in Abhängigkeit der entlang der Strecke aufgenommenen Punkte ein Intensitätsprofil.

Die Strukturen werden bezüglich ihrer Größe analysiert und das Intensitätsprofil wird, um das Auflösungsvermögen des Auges bei unterschiedlicher Entfernung zu berücksichtigen, einer mathematischen Filterung (Fourier-Transformation) unterzogen und dabei unter anderem in die kurzwelligen und langwelligen Wellenlängenbereiche aufgeteilt. Für den kurzwelligen Wellenlängenbereich (0,3 bis 1,2 mm) und den langwelligen Wellenlängenbereich (1,2 bis 12 mm) geht aus der mathematischen Filterung jeweils ein Messwert hervor, der jeweils die Varianz der Lichtintensität für Strukturen des entsprechenden Wellenlängenbereichs umfasst und der ein Maß für die Oberflächenstruktur angibt.

Um einen guten visuellen Eindruck der Oberfläche zu erzielen, sind niedrige Messwerte für den langwelligen Wellenlängenbereich von Bedeutung. Aber auch niedrige Messwerte im kurzwelligen Wellenlängenbereich sind für ein gutes optisches Erscheinungsbild der Oberfläche vorteilhaft.

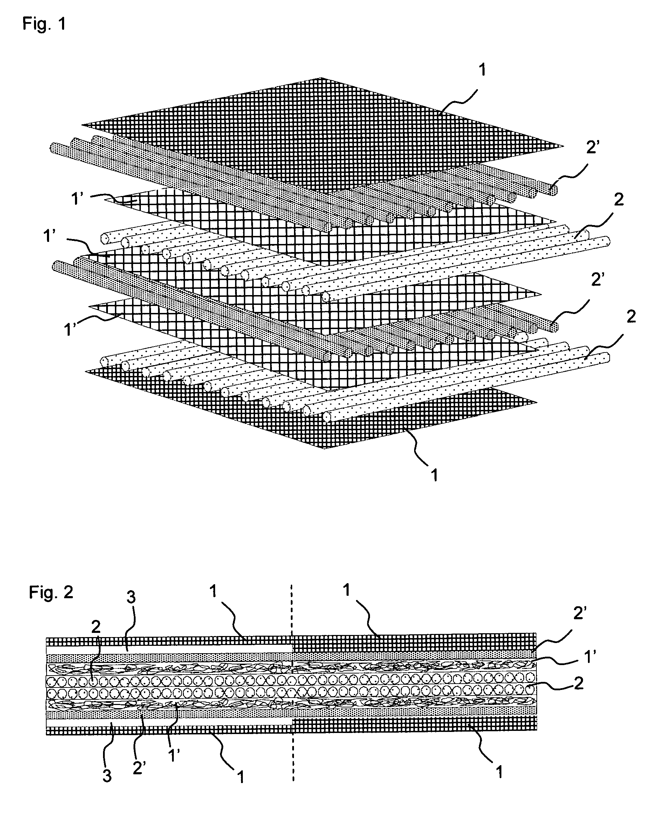

Erfindungsgemäß wird das Entstehen der als Faserabzeichnung wahrgenommen Welligkeiten an der Oberfläche der lackierten faserverstärkten Bauteile reduziert bzw. unterbunden, indem, wie in Fig. 1 und 2 zu sehen, nicht nur die Deckschichten 1 des FVK-Bauteils aus Faservlies gebildet werden, sondern auch zwischen den einzelnen Faserlagen 2,2' des Faserverbundstoffes zusätzliche Faservliese als Dämpfungsschichten 1' eingelegt werden. Durch die Dämpfungsschichten 1' wird die Textur der Faserlagen 2,2' der Verstärkung, die in den Figuren durch UD-Tapes gebildet sind, generell aber auch aus Geweben, Gestricken, Geflechten gebildet sein können, quasi nach außen abgeschirmt. Die zur Bildung der Dämpfungsschicht 1' verwendeten Vliese können gröber sein bzw. gröbere Strukturen aufweisen als die außen zur Bildung der Deckschichten 1 vorgesehenen, da sie nicht optisch hervortreten. Dabei ist erfindungsgemäß der mit einem wave-scan-Gerät ermittelte Messwert der als Deckschichten 1 eingesetzten Vliese im langwelligen Wellenlängenbereich (1,2 bis 12 mm) geringer als 12 und im kurzwelligen Wellenlängenbereich (0,3 bis1,2 mm) kleiner als 20, so dass an der Oberfläche keine Welligkeit aus dem Deckschichtenvlies detektiert werden kann und die Verstärkungsfasern der Faserlagen 2,2' nach außen abgeschirmt werden, was durch die als Dämpfungsschichten 1' zwischen den Faserlagen 2,2' angeordneten Vliese unterstützt wird.

So kann durch Einlegen von Faservliesen als Deckschichten 1 auf die Ober- und Unterseite des Faserverbundstoffes und als Dämpfungsschichten 1' zwischen die Faserlagen 2,2' die als Faserabzeichnung wahrgenommene Welligkeit verhindert oder reduziert werden.

Vorzugsweise kann ein FVK-Bauteil Verstärkungsfaserlagen 2,2' aus unidirektionalen Gelegen aufweisen, so dass innerhalb einer Faserlage 2,2' anders als bislang keine Faserkreuzungspunkte vorliegen. Bei den üblichen 2D-Matten als Faserlagen überkreuzen sich die Faserstränge innerhalb der Matte, so dass sich gerade an den Überkreuzungspunkten der höhere Faseranteil auf den Oberfläche abzeichnet. Durch die erfindungsgemäß zwischen den Faserlagen 2,2' vorgesehenen Dämpfungsschichten 1' werden die Faserkonturen der einzelnen Lagen 2,2' ausgeglichen, auch wenn die Faserausrichtung von Lage zu Lage 2,2' gegeneinander versetzt sind. In den Figuren sind die UD-Faserstränge der benachbarten Lagen 2,2'jeweils um 90° zueinander versetzt, denkbar sind aber auch andere Orientierungen zwischen 0 bis und 90°, z. B. 45°, gegebenenfalls auch entsprechend einem am Bauteil auftretenden Lastpfad.

Ein erfindungsgemäßes FVK-Bauteil mit einer Class-A-fähigen Bauteiloberfläche, das sich als Bauteil der Fahrzeugaußenhaut eignet, zeigt auch nach Klimaeinwirkung, wie während der Bewitterung des Außenhaut-Bauteils mit Aufwärm-/Abwärm-Zyklen auf der Bauteiloberfläche deutlich reduzierte bzw. keine Welligkeiten, trotz der unterschiedliche Ausdehnungskoeffizienten der Fasern und des Matrixpolymers, auch wenn das Matrixpolymer ein Thermoplast und kein Duroplast ist.

Fig. 2 zeigt in Schnittdarstellung zwei weitere mögliche Ausführungsformen des Aufbaus eines FVK-Bauteils, das durch ein Heißpressverfahren hergestellt ist. Die gesamte Schichtdicke kann hierbei lediglich 1,2 mm betragen. Im Kern des Bauteils liegen hier zwei parallel in 90° orientierte UD-Lagen 2 vor, die vor dem Heißpressen jeweils eine Dicke von ca. 0,15 mm aufweisen. Über und unter den Kernlagen 2 ist jeweils eine Dämpfungsschicht 1' aus einem Vlies angeordnet, das vor dem Heißpressen vorliegend eine Stärke von etwa 0,1 mm und ein Flächengewicht von ca. 50 g/m² aufweist. Zwei weitere parallel jedoch in 0° orientierte UD-Lagen 2' von ca. 0,15 mm liegen jeweils auf bzw. unter der Dämpfungsschicht 1', ehe die Deckschichten 1 aus feinem Vlies das den Schichtaufbau abschließen. Die Vliese der Deckschichten 1 stellen die oben aufgeführten Welligkeitsparameter ("long wave"-Wert <12 und "short wave"-Wert < 20) für die lackierfähige Class-A-Oberfläche bereit.

Während in Fig. 2 auf der rechten Seite die etwa 0,2 mm starke Deckschicht allein durch ein Faservlies 1 gebildet wird, ist auf der linken Seite eine alternative Deckschicht dargestellt ist, die durch eine Coextrusionsfolie aus dem die Oberfläche der Deckschicht ausbildenden Vlies 1 und einer Sperrschicht 3 besteht. Die Sperrschicht 3 kann dazu vorgesehen sein, die Witterungseinflüsse zu minimieren, beispielsweise das Eindringen von Feuchtigkeit in die Verstärkungsfaserstruktur zu verhindern. Das Material der Sperrschicht 3 muss eine hohe Viskosität beziehungsweise Zähigkeit aufweisen um ein "Durchdrücken" der Faserstrukturen vermeiden zu können. Dagegen muss das Material der Deckschicht gut lackierbar sein.
Die Klimaeinwirkungen auf das FVK-Bauteil können so reduziert werden und damit die witterungsbedingt entstehenden Faserabzeichnungen weiter vermindert/verhindert werden.

In einer weiteren Ausgestaltung der Erfindung wird zumindest auf einer Seite des FVK-Bauteils auf dem Vlies der Deckschicht 1 eine Kunststofffolie angeordnet. Die Kunststofffolie deckt das FVK-Bauteil nach außen ab und bildet eine gut lackierbare Oberfläche aus. Die Kunststofffolie ist dabei aus Thermoplasten, beispielweise aus Polypropylen oder Polyamid, insbesondere mit Füllstoffen gebildet.

Besonders bevorzugt ist die Kunststofffolie zweilagig gebildet. Die obere Lage ist dabei gut lackierbar und weist eine Dicke im Bereich von 20 bis 150 µm auf. Bevorzugt enthält die obere Lage mineralische Füllstoffe, wie bspw. Talkum, in einem Anteil von 5 bis 40 Gew.%. Die untere Lage der Kunststofffolie, bzw. die innere Schicht, weist eine im Vergleich zur oberen Lage bei Verarbeitungstemperatur höhere Viskosität auf. Die Dicke ist größer als diejenige der oberen Lage. Sie liegt im Bereich von 100 bis 500 µm. Der Füllstoffanteil ist dabei ebenfalls höher als in der oberen Lage und liegt im Bereich von 40 bis 65 Gew.%.

Besonders bevorzugt handelt es sich bei der Kunststofffolie um eine zweilagige Coextrusionsfolie aus gefülltem Polypropylen.

In einer weiteren Ausgestaltung der Erfindung treten zusätzlich zu den Faserlagen (2,2') der mehrlagigen Verstärkungsfaserstruktur auch unverstärkte, bzw. nicht faserverstärkte Lagen aus Kunststoff auf. Diese zumindest eine Lage befindet sich innerhalb des FVK-Bauteils, so dass nach außen, beziehungsweise nach oben und nach unten zumindest jeweils eine Faserlage (2,2') folgt. Hierdurch wird ein faserverstärktes Kunststoffbauteil aus einer mehrlagigen Verstärkungsfaserstruktur und zumindest einer nicht faserverstärkten Kunststofflage und zumindest einer Deckschicht aus einem in einem Matrixsystem eingebetteten Faservlies (1), die eine lackierfähige Class-A-Oberfläche gebildet. Das Kunststoffbauteil umfasst zumindest eine Dämpfungsschicht, die zwischen zwei benachbarten Faserlagen (2,2') der mehrlagigen Verstärkungsfaserstruktur angeordnet ist und ebenfalls ein in ein Matrixsystem eingebettetes Faservlies (1') umfasst.

In bevorzugter Ausgestaltung der Erfindung werden als Matrixmaterial des faserverstärkten Kunststoffbauteils (FVK-Bauteil) Thermoplasten verwendet. Bevorzugte Thermoplasten sind PP, PA, PET, PC, PBT, einzeln oder als Polymerblends.

Bei dem gebildeten FVK-Bauteil kann es sich um ein Halbzeug handeln oder auch um das fertige Bauteil. Als Halbzeug weist das FVK-Bauteil bevorzugt eine plattenförmige Geometrie auf. Derartige Halbzeuge werden auch als Organoblech bezeichnet.

Bei Verwendung thermoplastischer Matrixmaterialien umfasst die Herstellung der FVK-Bauteile oder Organobleche die folgenden Verfahrensschritte:
a) Abwechselndes Übereinanderschichten der Faserlagen (2, 2') aus Verstärkungsfasern und der Dämpfungslagen aus Faservlies (1', 1), wobei die oberste und die unterste Lage aus Faservlies (1) bestehen,
b) Heißpressen des Lagenaufbaus in einer Heißpresse bei der Verarbeitungstemperatur der jeweiligen Thermoplasten.
   Hierauf erfolgt optional
c) Auflegen einer Kunststofffolie oder Coextrusionsfolie auf zumindest die obere Oberfläche des FVK-Bauteils oder Organoblechs, gegebenenfalls unter Verwendung einer Zwischenlage aus einer Klebefolie, *was jedoch nicht zwingend ist*
d) Auflaminieren der Kunststofffolie oder Coextrusionsfolie bei erhöhter Temperatur.

Bei der Herstellung des FVK-Bauteils oder Organoblechs wird die Kunststoffmatrix im Wesentlichen als Bestandteil der verwendeten Faserlagen eingebracht. Als Faserlagen werden dabei mit Kunststoff imprägnierte bzw. beschichtete Faserlagen verwendet. Die Verstärkungsfaserlagen sind dichter als die Faservliese. Das bevorzugte Flächengewicht liegt bei Glasfasern bei ca. 200 bis 300 g/m². Beispielsweise kann ein UD-Tape aus Glasfaser/Polypropylen mit einer Dichte von 1,47 g /cm³, einem Fasergehalt von 60 Gew. % (ca. 35 Vol.%), einem Flächengewicht von 240 g/m² und einer Dicke von 270 µm eingesetzt werden.

Die Faservliese, umfassend Dämpfungs- und Deckschicht, enthalten dabei in der Regel keinen eigenen matrixbildenden Thermoplast, sondern nur polymere Binder. Die Faservliese sind erfindungsgemäß aus Glasfasern gebildet. Beispielsweise kann ein Glasfaservlies mit einem Flächengewicht von 50 g/m² und einer Dicke von 430 µm eingesetzt werden, wobei der Glasfaserdurchmesser 10 µm beträgt.

Bevorzugt ist das Faservlies gröber bzw. weniger dicht als die Verstärkungsfaserlagen. Werden als Fasern nur Glasfasern verwendet weisen das Faservlies der Dämpfungsschicht (1') und/oder der Deckschicht (1) bevorzugt ein Flächengewicht von 10 bis 150 g/m², besonders bevorzugt von 20 bis 100 g/m² auf und die Verstärkungsfaserlagen ein Flächengewicht von 200 bis 300 g/m² auf.

Beim Heißpressen im Schritt b) verteilt sich der flüssige Thermoplast gleichmäßig innerhalb der Faserlagen und den Dämpfungsschichten aus Faservlies. Das vergleichsweise grobe Faservlies nimmt dabei Thermoplastmatrix auf und wird deutlich zusammengepresst. Im Falle der Verwendung einer Kunststofffolie kann die oberste Faservlieslage (1) zusätzlich Matrixkunststoff aus der Kunststofffolie aufnehmen.

In bevorzugter Ausgestaltung werden als Faserlagen (2, 2') UD-Lagen, bzw. Fasertapes verwendet, die von Lage zu Lage jeweils in 45° oder 90° Versatz angeordnet sind.

Ein bevorzugter Aufbau des Organoblechs oder FVK-Bauteile erfolgt nach folgendem Schema: Faservlies/UD-Faserlage 0°/Faservlies/2 UD-Faserlagen 90°/Faservlies//UD-Faserlage 0°/ Faservlies. Dabei kann die Ausrichtung der Faserlagen auch mit anderem Versatz oder anderer Reihenfolge erfolgen.
Besonders bevorzugt weist das Organoblech oder FVK-Bauteil auf einer Oberfläche eine Kunststoff- oder Coextrusionsfolie auf.

Die Heißpresstemperatur richtet sich nach den verwendeten Thermoplasten und erfolgt bei der thermoplastischen Verarbeitungstemperatur der jeweiligen Thermoplasten. Die Temperatur liegt typischerweise im Bereich von 150 bis 220°C. Gegebenenfalls kann die Kunststofffolie oder Coextrusionsfolie bereits vor dem Heißpressen in Schritt b) aufgebracht werden und beim Heißpressen fest mit dem FVK-Körper verbunden werden. Hierdurch lässt sich das Auflaminieren einsparen.

Soweit es sich bei dem FVK-Körper um ein Halbzeug handelt, kann nach dem Prozessschritten b) oder d) eine Weiterverarbeitung durch ein thermoplastisches Urformverfahren, insbesondere durch ein Heißpressen erfolgen.

Als bevorzugte FVK-Bauteile werden Türen, Klappen, Hauben oder Dächer von Kraftfahrzeugen gebildet.

## Patentansprüche

1. Faserverstärktes Kunststoffbauteil (FVK-Bauteil) mit einer mehrlagigen Struktur aus Verstärkungsfaserlagen, Dämpfungsschichten und mindestens einer Deckschicht und mit einem Matrixsystem aus Harz oder Thermoplast,
wobei die Oberfläche eine lackierfähige Class-A-Oberfläche bildet,
und wobei das Kunststoffbauteil mehrere Verstärkungsfaserlagen (2, 2') aufweist, wobei zwischen jeweils zwei benachbarten Verstärkungsfaserlagen (2, 2') jeweils eine Dämpfungsschicht (1') angeordnet ist und zumindest auf einer Seite des FVK-Bauteils eine Deckschicht (1) angeordnet ist,
**dadurch gekennzeichnet, dass**
die Dämpfungsschichten (1') und die mindestens eine Deckschicht (1) aus Faservlies bestehen, wobei die Faservliese aus Glasfaservlies bestehen und diejenigen, welche die Dämpfungsschichten (1') bilden, *eine gröbere Struktur aufweisen als die Faservliese, welche die mindestens eine Deckschicht (1) bilden.*

2. FVK-Bauteil nach Anspruch 1,
**dadurch gekennzeichnet, dass**
die Dicke der Faservliese der Dämpfungsschichten und der Deckschichten im Bereich von 5 bis 40 % der Dicke einer der benachbarten Verstärkungsfaserlagen (2, 2') liegt.

3. FVK-Bauteil nach einem der voran gegangenen Ansprüche,
**dadurch gekennzeichnet, dass**
die Matrix aus Thermoplasten besteht oder das FVK-Bauteil ein thermoplastisches Organoblech bildet.

4. FVK-Bauteil nach zumindest einem der Ansprüche 1 bis 3,
**dadurch gekennzeichnet, dass**
die Fasern in den Verstärkungsfaserlagen (2, 2') als Gewebe, unidirektionale oder multidirektionale Gelege, Gestricke, Geflechte aus Einzelfasern, Faserbündeln (Rovings) oder Faserbändern (Tapes) vorliegen, wobei die Fasern Glasfasern, Carbonfaser, Kohlefasern, Polymerfasern, bevorzugt Aramidfasern, Metallfasern, Keramikfasern und/oder Naturfasern sind.

5. FVK-Bauteil nach Anspruch 4,
**dadurch gekennzeichnet, dass**
die Faserausrichtungen der unidirektionalen Gelege aus Faserbändern in benachbarten Verstärkungsfaserlagen (2, 2') zueinander um einen Winkel zwischen 0° bis 90° versetzt sind.

6. FVK-Bauteil nach zumindest einem der Ansprüche 1 bis 5,
**dadurch gekennzeichnet, dass**
auf zumindest einer Deckschicht (1) des FVK-Bauteils eine Kunststofffolie oder Coextrusionsfolie angeordnet ist.

7. FVK-Bauteil nach Anspruch 6,
**dadurch gekennzeichnet, dass**
die Kunststoff- oder Coextrusionsfolie zweilagig mit unterschiedlichem Füllstoffgehalt ausgebildet ist.

8. Verfahren zur Herstellung eines FVK-Bauteils oder Organoblechs gemäß einem der Ansprüche 1 bis 5, umfassend die folgenden Schritte:
a) Abwechselndes Übereinanderschichten von Verstärkungsfaserlagen (2, 2') und Dämpfungslagen (1') aus Faservlies, wobei als unterste und oberste Lage eine Deckschicht aus Faservlies (1) angeordnet wird,
b) Heißpressen des Lagenaufbaus in einer Heißpresse,
**dadurch gekennzeichnet, dass**
die Verstärkungsfaserlagen (2, 2') mit Thermoplasten imprägniert oder infiltriert sind.

9. Verfahren nach Anspruch 8,
**dadurch gekennzeichnet, dass**
das Verfahren die weiteren Schritte umfasst:
c) Auflegen einer Kunststofffolie oder Coextrusionsfolie auf zumindest die obere Oberfläche des FVK-Bauteils oder Organoblechs unter Verwendung einer Zwischenlage aus einer Klebefolie und
d) Auflaminieren der Kunststofffolie oder Coextrusionsfolie bei erhöhter Temperatur.

10. Verfahren nach Anspruch 8,
**dadurch gekennzeichnet, dass**
das Verfahren die weiteren Schritte umfasst:
c) Auflegen einer Kunststofffolie oder Coextrusionsfolie auf zumindest die obere Oberfläche des FVK-Bauteils oder Organoblechs ohne Verwendung einer Zwischenlage aus einer Klebefolie und
d) Auflaminieren der Kunststofffolie oder Coextrusionsfolie bei erhöhter Temperatur.

11. Verfahren nach Anspruch 9 oder 10,
**dadurch gekennzeichnet, dass**
als Fasern Glasfasern verwendet werden und das Faservlies der Dämpfungsschicht (1') und/oder der Deckschicht (1) ein Flächengewicht von 10 bis 150 g/m² aufweist und das der Verstärkungsfaserlagen ein solches von 200 bis 300 g/m².

12. Verfahren nach Anspruch 11,
**dadurch gekennzeichnet, dass**
das Faservlies der Dämpfungsschicht (1') und/oder der Deckschicht (1) ein Flächengewicht von 20 bis 100 g/m² aufweist.

## Claims

1. Fibre-reinforced plastic component (FRP component) having a multilayer structure of reinforcement fibre layers, damping layers and at least one covering layer and having a matrix system of resin or thermoplastic,
wherein the surface forms a paintable class A surface,
and wherein the plastic component has a plurality of reinforcement fibre layers (2, 2'),
wherein between each two adjacent reinforcement fibre layers (2, 2') a damping layer (1') is arranged, and a covering layer (1) is arranged at least on one side of the FRP component,
**characterised in that**
the damping layers (1') and the at least one covering layer (1) are composed of non-woven fibre fabric, wherein the non-woven fibre fabrics are composed of glass fibre mat and those that form the damping layers (1') have a coarser structure than the non-woven fibre fabrics that form the at least one covering layer (1).

2. FRP component according to claim 1,
**characterised in that**
the thickness of the non-woven fibre fabrics of the damping layers and the covering layers is in the range of from 5 to 40% of the thickness of one of the adjacent reinforcement fibre layers (2, 2').

3. FRP component according to one of the preceding claims,
**characterised in that**
the matrix is composed of thermoplastics or the FRP component forms a thermoplastic organic sheet.

4. FRP component according to at least one of claims 1 to 3,
**characterised in that**
the fibres in the reinforcement fibre layers (2, 2') are present as woven fabric, unidirectional or multidirectional pressed fabric, knitted fabric, braided fabric of individual fibres, fabric rovings or fabric tapes, wherein the fibres are glass fibres, carbon fibres, polymer fibres, preferably aramid fibres, metal fibres, ceramic fibres and / or natural fibres.

5. FRP component according to claim 4,
**characterised in that**
the fibre orientations of the unidirectional pressed fabrics consisting of fibre tapes in adjacent reinforcement fibre layers (2, 2') are offset relative to each other by an angle of between 0° and 90°.

6. FRP component according to at least one of claims 1 to 5,
**characterised in that**
a plastic film or a co-extrusion film is arranged on at least one covering layer (1) of the FRP component.

7. FRP component according to claim 6,
**characterised in that**
the plastic or co-extrusion film is formed in two layers with different filler content.

8. Method for producing a FRP component or organic sheet according to one of claims 1 to 5, comprising the following steps:
a) alternating layering of reinforcement fibre layers (2, 2') and damping layers (1') of non-woven fibre fabric on top of each other, wherein a covering layer of non-woven fibre fabric (1) is provided as the bottom layer and as the top layer,
b) hot pressing the layer structure in a hot press,
**characterised in that**
the reinforcement fibre layers (2, 2') are impregnated or infiltrated with thermoplastics.

9. Method according to claim 8,
**characterised in that**
the method comprises the further steps:
c) laying a plastic film or co-extrusion film on at least the top surface of the FRP component or organic sheet using an intermediate layer made of an adhesive film and
d) laminating on the plastic film or co-extrusion film at high temperature.

10. Method according to claim 8,
**characterised in that**
the method comprises the further steps:
c) laying a plastic film or co-extrusion film on at least the top surface of the FRP component or organic sheet without using an intermediate layer of an adhesive film and
d) laminating on the plastic film or co-extrusion film at high temperature.

11. Method according to claim 9 or 10,
**characterised in that**
the fibres used are glass fibres and the non-woven fibre fabric of the damping layer (1') and / or the covering layer (1) has a basis weight of 10 to 150 g/m², and the reinforcement fibre layers have a basis weight of 200 to 300 g/m².

12. Method according to claim 11,
**characterised in that**
the non-woven fibre fabric of the damping layer (1') and / or the covering layer (1) has a basis weight of 20 to 100 g/m².

## Revendications

1. Composant en matière plastique (composant FVK) renforcé par des fibres comprenant une structure multicouche constituée de couches de fibre de renforcement, des couches d'amortissement et d'au moins une couche de recouvrement et un système de matrice en résine ou en thermoplastique, la surface formant une surface de classe A pouvant être peinte, et le composant en matière plastique comprenant plusieurs couches de fibres de renforcement (2, 2'), entre chaque couches de fibres de renforcement adjacentes respectives (2, 2') étant disposée une couche d'amortissement (T) et au moins sur une face du composant FVK est disposée une couche de recouvrement (1), **caractérisé en ce que** les couches d'amortissement (T) et l'au moins une couche de recouvrement (1) sont constituées de non-tissé en fibres, les non-tissés en fibres étant constitués en non-tissé de fibres de verre et ceux, qui forment les couches d'amortissement (T), présentent une structure plus grande que les non-tissés en fibres qui forment l'au moins une couche de recouvrement (1).

2. Composant FVK selon la revendication 1, **caractérisé en ce que** l'épaisseur des non-tissés en fibres des couches d'amortissement et des couches de recouvrement est comprise dans une plage entre 5 et 40 % de l'épaisseur d'une des couches de fibres de renforcements adjacentes (2, 2').

3. Composant FVK selon l'une quelconque des revendications précédentes, **caractérisé en ce que** la matrice est constituée de thermoplastique ou le composant FVK forme une tôle organique.

4. composant FVK selon au moins l'une des revendications 1 à 3, **caractérisée en ce que** les fibres dans les couches de fibres de renforcement (2, 2') existent en tant que tissu, nappes, tricots ou maillages unidirectionnels ou multidirectionnels en fibres individuelles, en stratifil ou en bandes fibreuses, les fibres étant des fibres de verre, des fibres de carbones, des fibres polymères, de préférence des fibres d'aramide, des fibres métalliques, des fibres en céramique et/ou des fibres naturelles.

5. Composant FVK selon la revendication 4, **caractérisé en ce que** les dispositifs en fibres de la nappe unidirectionnelle en bandes de fibres sont déplacés dans les couches de fibres de renforcement (2, 2') adjacentes les unes par rapport aux autres selon un angle compris entre 0°et 90°.

6. Composant FVK selon au moins l'une des revendications 1 à 5, **caractérisé en ce que** sur au moins une couche de recouvrement (1) du composant FVK est disposée une feuille de matière plastique ou une couche de co-extrusion.

7. Composant FVK selon la revendication 6, **caractérisée en ce que** la feuille de matière plastique ou de co-extrusion est formée de deux couches ayant une teneur en matière plastique différente.

8. Procédé de fabrication d'un composant FVK ou d'une tôle organique selon l'une quelconque des revendications 1 à 5, comprenant les étapes suivantes consistant à :
a) alterner l'empilement des couches de fibres de renforcement (2, 2') et les couches d'amortissement (1') en non-tissé, en tant que couche inférieure et couche supérieure étant une couche de recouvrement en non-tissé de fibres (1),
b) compresser à chaud la structure en couche dans une presse à chaud, **caractérisé en ce que** les couches de fibres de renforcement (2, 2') sont imprégnées ou infiltrées de thermoplastique.

9. Procédé selon la revendication 8, **caractérisé en ce que** le procédé comprend d'autres étapes consistant à :
c) placer une feuille en matière plastique ou une feuille de co-extrusion sur au moins la surface supérieure du composant FVK ou de la tôle organique à l'aide d'une couche intermédiaire en feuille adhésive et
d) laminer la feuille en matière plastique ou la feuille de co-extrusion à une température élevée.

10. Procédé selon la revendication 8, **caractérisé en ce que** le procédé comprend les étapes suivantes consistant à :
c) placer une feuille en matière plastique ou une feuille de co-extrusion sur au moins la surface supérieure du composant FVK ou de la tôle organique sans utiliser une couche intermédiaire en feuille adhésive et
d) laminer la feuille en matière plastique ou la feuille de co-extrusion à une température élevée.

11. Procédé selon la revendication 9 ou la revendication 10, **caractérisé en ce qu'**en tant que fibres sont utilisées des fibres de verre et le non-tissé en fibres de la couche d'amortissement (T) et/ou de la couche de recouvrement (1) présente un poids de revêtement compris entre 10 et 50 g/m2 et celui des couches en fibres de renforcement un poids de revêtement compris entre 200 et 300 g/m2.

12. Procédé selon la revendication 11, **caractérisé en ce que** le non-tissé en fibres de la couche de renforcement (1') et/ou de la couche de recouvrement présente un poids de revêtement compris entre 20 et 100g/m2.
